# EUROPÄISCHE PATENTANMELDUNG

(11) **EP 2 133 308 A1**
(43) Veröffentlichungstag der Anmeldung: **16.12.2009**
(21) Anmeldenummer: 08010725.3
(22) Anmeldetag: 12.06.2008
(51) Int. Cl.: C01B 3/12, F23K 5/00

(54) **Reingasvorwärmeinrichtung sowie Verfahren zur Reingasvorwärmung**

(71) Anmelder: SIEMENS AKTIENGESELLSCHAFT, 80333 München (DE)
(72) Erfinder: Graeber, Carsten, 91056 Erlangen (DE); Zimmermann, Gerhard, Dr., 91315 Höchstadt/Aisch (DE)

(57) **Zusammenfassung**

Die Erfindung betrifft Reingasvorwärmeinrichtung mit einem Gas-/Gas-Wärmetauscher (1) zur Erwärmung eines Reingases (17), und einer Rohgasaufbereitungsanordnung (2) zur Aufbereitung des Rohgases (15) zu Reingas (17) oder Brenngas (18), wobei mittels des Gas-/Gas-Wärmetauschers (1) das Reingas (17) erwärmt ist durch das primärseitig durch den Gas-/Gas-Wärmetauscher (1) strömende Rohgas (15). Die Erfindung betrifft ferner ein Verfahren zur Reingasvorwärmung in GuD-Anlagen mit integrierter Vergasung und CO₂-Abtrennung, wobei Rohgas (15) entsteht, das zu Reingas (17) aufbereitet wird und wobei dem Reingas (17) Heizenergie zugeführt wird, um es als Brenngas (18) einem zugeordneten Brenner zur Verbrennung zuzuführen, wobei die Heizenergie aus dem Rohgas (15) in einem Wärmetausch mit dem Reingas (17) gewonnen wird.

## Beschreibung

Die Erfindung betrifft eine Reingasvorwärmeinrichtung, insbesondere eine Reingasvorwärmeinrichtung in GuD-Anlagen mit integrierter Vergasung und CO₂-Abtrennung, und bezieht sich auf die Nutzung von Rohgaswärme zur Reingasvorwärmung. Die Erfindung betrifft ferner ein Verfahren zum Betrieb einer solchen Reingasvorwärmung.

Der Weg des Rohgases im GuD-Kraftwerk mit integrierter Vergasung (IGCC) und CO₂-Abtrennung umfasst die Rohgaskühlung - je nach Konzept durch Abhitzenutzung zur Dampferzeugung oder Wasserquench -, die Entstaubung, die Venturi-Wäsche (Entfernung von Alkalien, Halogeniden, etc.), die CO-Konvertierung (oder CO-Shift) und die Entschwefelung (Rohgas-Shift). Die CO-Konvertierung kann anwendungsabhängig auch der Entschwefelung nachgeschaltet sein (Reingas-Shift).

Der Begriff des Rohgases wird im Folgenden für ein Synthesegas verwendet, bei dem noch Stoffe im Verlauf der Aufbereitung entnommen werden, wie z.B. bei der Entstaubung, der Venturi-Wäsche, der Entschwefelung und der CO₂-Abtrennung.

Der Begriff des Reingases wird im Folgenden für ein Synthesegas nach Abschluss der vorgenannten Reinigungs- bzw. Abtrennungsschritte verwendet. Das Reingas wird üblicherweise durch Zugabe von Stickstoff und durch Aufsättigung mit Wasserdampf für die Verbrennung konditioniert.

Die CO-Konvertierung, auch Wassergas-Shift-Reaktion genannt, ist ein Verfahren um in einem Rohgas den Kohlenmonoxid-Anteil zu minimieren und gleichzeitig den Wasserstoff-Anteil zu erhöhen.

Das Reaktionsschema der Gleichgewichtsreaktion lautet:

CO + H₂O ↔ CO₂ + H₂

Die Shift-Reaktion verläuft leicht exotherm.

Mit Wasserdampf reagiert das Kohlenmonoxid (CO) zu Kohlendioxid (CO₂) und Wasserstoff (H₂). Zur Beschleunigung der Reaktion und zur Verringerung der Aktivierungsenergie läuft die Reaktion an einem Katalysator bei Temperaturen von ca. 200 - 500 °C ab. Bei höherer Temperatur liegt eine schnelle Kinetik aber ein ungünstiges chemisches Gleichgewicht vor. Bei niedrigen Temperaturen ist das Gleichgewicht stärker auf der rechten Seite des Reaktionsschemas, aber die Kinetik nimmt ab. Die Shift-Reaktion wird daher meist zweistufig in einer Hochtemperatur-und einer Niedertemperatur-Shiftstufe durchgeführt. Der Kohlenmonoxid-Gehalt im Rohgas lässt sich so je nach Fahrweise des Reaktors auf 0,6 bis 1,5 Vol. -% absenken.

Das Gas aus der ersten Shift-Reaktorstufe hat ein Temperaturniveau, das die Erzeugung von Hochdruckdampf (HD-Dampf) zulässt.

Aufgrund des vergleichsweise geringen Heizwertes des Synthesegases spielt beim IGCC die Nutzung der fühlbaren Wärme des Brenngases, das der Gasturbine zugeführt wird, eine wesentliche Rolle. IGCC-Konzepte sehen daher i.d.R. eine Vorwärmung des Reingases vor (mindestens zur Überhitzung des H₂O-gesättigten Gases), aber auch darüber hinaus zur Steigerung der Gesamtanlageneffektivität.

Derzeitige Konzepte sehen eine Reingasvorwärmung durch indirekten Wärmetausch mit Mitteldruck- oder sogar Hochdruck-Speisewasser vor.

Gattungsmäßige Nachteile dieser Vorwärmung sind, dass dem GuD-Kraftwerk Wärme auf vergleichsweise hohem Temperaturniveau entzogen wird und gleichzeitig die erreichbare Reingasvorwärmung durch die Temperatur des Speisewassers (z.B. 310°C) begrenzt ist.

Aufgabe der Erfindung ist daher die Angabe einer Reingasvorwärmeinrichtung bzw. eines Verfahrens zur Vorwärmung des Reingases in GuD-Anlagen mit integrierter Vergasung, welche diese Nachteile überwinden.

Erfindungsgemäß wird die auf eine Vorrichtung zur Reingasvorwärmung gerichtete Aufgabe gelöst durch eine Reingasvorwärmeinrichtung, umfassend einen Gas-/Gas-Wärmetauscher zur Erwärmung eines Reingases, und eine Rohgasaufbereitungsanordnung zur Aufbereitung des Rohgases zu Reingas oder Brenngas, wobei mittels des Gas-/Gas-Wärmetauschers das Reingas (oder Brenngas) erwärmt ist durch das primärseitig durch den Gas-/Gas-Wärmetauscher strömende Rohgas.

Die Erfindung beruht demnach auf dem Gedanken, die Reingasvorwärmung mit der Abhitzenutzung des (teil)-konvertierten Gases zu koppeln anstatt, wie sonst üblich, die Abwärme des teil-konvertierten Gases zur Erzeugung von HD-Dampf zu nutzen.

Die Erfindung erlaubt eine Erhöhung der Reingasvorwärmtemperatur bzw. der Brenngastemperatur. Dazu wird vorgeschlagen, das Reingas indirekt durch das heiße konvertierte Gas aus dem CO-Shift aufzuwärmen ("Rohgas-/Reingas-Wärmetauscher"). Aufgrund des höheren Temperaturniveaus sind Temperaturen bis nahe 400°C vorstellbar.

Vorteilhafterweise ist der Gas-/Gas-Wärmetauscher in Strömungsrichtung eines Rohgases einer Venturi-Wäsche nachgeschaltet, da vor der Venturi-Wäsche noch verschiedene Schadstoffe im Rohgas enthalten sind, die bei Leckagen des Wärmetauschers zu einer Schädigung der Gasturbine führen würden. Im vorgeschlagenen Konzept enthält das teil-konvertierte Rohgas nur noch Schwefelwasserstoff (H₂S) als wesentlichen Schadstoff, der zwar im Störfall zu einer kurzzeitigen Emission von Schwefeldioxid (S0₂), nicht aber zur unmittelbaren Schädigung der Gasturbine führen würde. Die Leckage wäre unmittelbar detektierbar.

Zweckmäßigerweise ist der Gas-/Gas-Wärmetauscher in Strömungsrichtung eines Rohgases einer Hochtemperatur-Shift-Stufe eines Wassergas-Shift-Reaktors primärseitig nachgeschaltet und einer Niedertemperatur-Shift-Stufe eines Wassergas-Shift-Reaktors primärseitig vorgeschaltet. Die Anwendung eines Rohgas-/Reingas-Wärmetauschers hinter der ersten CO-Shift-Stufe erlaubt die direkte Nutzung der dort vorhandenen Wärme im gesamten GuD-Prozess, während die bisher vorgesehene HD-Dampferzeugung nur dem Rankine-Cycle zugute kommt. Es wird ein merklicher Wirkungsgradgewinn erreicht.

Es ist vorteilhaft, wenn die Reingasvorwärmeinrichtung einen weiteren Wärmetauscher aufweist, der sekundärseitig in Strömungsrichtung eines Reingases der Sekundärseite des Gas-/Gas-Wärmetauschers vorgeschaltet ist, wodurch die mit dem nachgeschalteten Gas/Gas-Wärmetauscher erzielbare Temperatur erhöht wird.

Dabei ist es zweckmäßig, wenn der weitere Wärmetauscher primärseitig von Speisewasser durchflossen ist.

Im erfinderischen Verfahren zur Reingasvorwärmung in GuD-Anlagen mit integrierter Vergasung und CO₂-Abtrennung, wobei Rohgas entsteht, das zu Reingas aufbereitet wird und wobei dem Reingas Heizenergie zugeführt wird, um es als Brenngas einem zugeordneten Brenner zur Verbrennung zuzuführen, wird die Heizenergie aus dem Rohgas in einem Wärmetausch mit dem Reingas übertragen.

Vorteilhafterweise wird das Rohgas (15) in einer Hochtemperatur-Shiftstufe (5) teil-konvertiert, bevor die Heizenergie aus dem Rohgas (15) in einem Wärmetausch mit dem Reingas (17) übertragen wird.

In weiteren vorteilhaften Verfahrensschritten wird das Rohgas nach dem Wärmetausch weiter aufbereitet, insbesondere wird eine Shift-Reaktion in einer Niedertemperatur-Shiftstufe durchgeführt. Dabei wird Kohlendioxid gebildet, das in einem nächsten Verfahrensschritt abgetrennt wird.

Zweckmäßigerweise wird das verbleibende Reingas für die Verbrennung in einer Gasturbine konditioniert. Vorteilhafterweise wird hierzu Stickstoff beigemischt und das Gemisch mit Wasserdampf aufgesättigt.

In einer vorteilhaften Ausführungsform wird das so konditionierte Reingas mit Speisewasser vorgewärmt.

Die Erfindung wird beispielhaft anhand der Zeichnungen näher erläutert. Es zeigen schematisch:
- Figur 1: Konzept zur Erwärmung von Reingas gemäß dem Stand der Technik und
- Figur 2: erfinderisches Konzept.

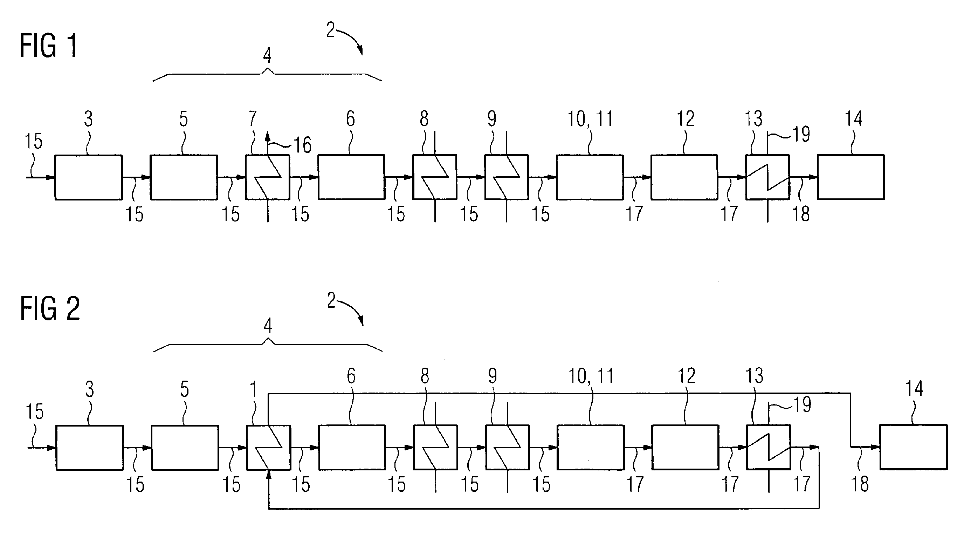

Die Figur 1 zeigt schematisch und beispielhaft ein Konzept zur Reingasvorwärmung gemäß dem Stand der Technik. Auf die Synthesegaserzeugung durch beispielsweise Kohlevergasung, bei der Kohle in einer Mischung aus partieller Oxidation und Vergasung mit Wasserdampf zu einem Gemisch aus Kohlenmonoxid und Wasserstoff umgesetzt wird, folgt die Gasreinigung und - konditionierung in einer Rohgasaufbereitungsanordnung 2.

Nach dem Quenchen des Rohgases zur Herabsetzung der Temperatur auf das Niveau der Reinigung (600 - 700 °C), (dem Filtern zum Entfernen der trockenen Partikel) und dem Waschen zum Entfernen von festen Partikeln und Alkalisalzen (Venturi-Wäsche 3) gelangt das Rohgas 15 in die erste CO-Shift-Stufe (Hochtemperatur-Shift-Stufe 5) eines Wassergas-Shift Reaktors 4, in der Kohlenmonoxid und Wasser bei hohen Temperaturen von 300 - 500 °C in Wasserstoff und Kohlendioxid überführt werden. Die Reaktion ist exotherm. In einem nachgeschalteten Wärmetauscher 7 wird die Abwärme des teil-konvertierten Gases 15 zur Erzeugung von Hochdruck-Dampf 16 genutzt. Das so abgekühlte Rohgas 15 gelangt in eine Niedertemperatur-Shift-Stufe 6 und wird bei ca. 300 °C weiter konvertiert. Eine weitere Abwärmenutzung mittels Wärmetauscher 8,9 schließt sich an. Das so abgekühlte Rohgas 15 durchläuft dann eine Entschwefelungs- 10 und eine CO₂-Abtrennungsanlage 11. Am Ende des Prozesses liegt Reingas 17 vor, das im wesentlichen Wasserstoff enthält. Dieses Reingas 17 wird in einer Reingaskonditionierung 12 z.B. mit Stickstoff gemischt und mit Wasserdampf aufgesättigt. Das konditionierte Reingas 17 wird durch indirekten Wärmetausch 13 mit Mitteldruck- oder Hochdruck-Speisewasser 19 erwärmt und als Brenngas 18 einem Brenner im GuD-Prozess 14 zur Verbrennung zugeführt.

Im erfinderischen Konzept, das in Figur 2 dargestellt ist, wird das Reingas 17 zusätzlich zum indirekten Wärmetausch 13 mit Mitteldruck- oder Hochdruck-Speisewasser 19 indirekt durch das heiße, teil-konvertierte Rohgas 15 aus der Hochtemperatur-Shift-Stufe 5 des Wassergas-Shift-Reaktors 4 mittels eines Gas/Gas-Wärmetauschers 1 aufgewärmt.

Der Wärmetauscher 13 kann entfallen, wenn die Erwärmung durch den Gas/Gas-Wärmetauscher 1 alleine so hoch ausfällt, dass eine gewünschte Brenngastemperatur erreicht wird.

## Patentansprüche

1. Reingasvorwärmeinrichtung, umfassend einen Gas-/Gas-Wärmetauscher (1) zur Erwärmung eines Reingases (17), und eine Rohgasaufbereitungsanordnung (2) zur Aufbereitung des Rohgases (15) zu Reingas (17) oder Brenngas (18), **dadurch gekennzeichnet, dass** mittels des Gas-/Gas-Wärmetauschers (1) das Reingas (17) erwärmt ist durch das primärseitig durch den Gas-/Gas-Wärmetauscher (1) strömende Rohgas (15).

2. Die Reingasvorwärmeinrichtung nach Anspruch 1, wobei der Gas-/Gas-Wärmetauscher (1) in Strömungsrichtung eines Rohgases (15) einer Venturi-Wäsche (3) nachgeschaltet ist.

3. Die Reingasvorwärmeinrichtung nach Anspruch 1 oder 2, wobei der Gas-/Gas-Wärmetauscher (1) in Strömungsrichtung eines Rohgases (15) einer Hochtemperatur-Shift-Stufe (5) eines Wassergas-Shift-Reaktors (4) primärseitig nachgeschaltet ist.

4. Die Reingasvorwärmeinrichtung nach einem der vorhergehenden Ansprüche, wobei der Gas-/Gas-Wärmetauscher (1) in Strömungsrichtung eines Rohgases (15) einer Niedertemperatur-Shift-Stufe (6) eines Wassergas-Shift-Reaktors (4) primärseitig vorgeschaltet ist.

5. Die Reingasvorwärmeinrichtung nach einem der vorhergehenden Ansprüche, wobei die Reingasvorwärmeinrichtung einen weiteren Wärmetauscher (13) aufweist, der sekundärseitig in Strömungsrichtung eines Reingases (17) der Sekundärseite des Gas-/Gas-Wärmetauschers (1) vorgeschaltet ist.

6. Die Reingasvorwärmeinrichtung nach Anspruch 5, wobei der weitere Wärmetauscher (13) primärseitig von Speisewasser durchflossen ist.

7. Ein Verfahren zur Reingasvorwärmung in GuD-Anlagen mit integrierter Vergasung und CO₂-Abtrennung, wobei Rohgas (15) entsteht, das zu Reingas (17) aufbereitet wird und wobei dem Reingas (17) Heizenergie zugeführt wird, um es als Brenngas (18) einem zugeordneten Brenner zur Verbrennung zuzuführen, **dadurch gekennzeichnet, dass** die Heizenergie aus dem Rohgas (15) in einem Wärmetausch mit dem Reingas (17) übertragen wird.

8. Das Verfahren nach Anspruch 7, wobei das Rohgas (15) in einer Hochtemperatur-Shiftstufe (5) teil-konvertiert wird, bevor die Heizenergie aus dem Rohgas (15) in einem Wärmetausch mit dem Reingas (17) übertragen wird.

9. Das Verfahren nach einem der Ansprüche 7 oder 8, wobei das Rohgas (15) nach dem Wärmetausch weiter aufbereitet wird, insbesondere eine Shift-Reaktion in einer Niedertemperatur-Shiftstufe (6) durchgeführt wird.

10. Das Verfahren nach Anspruch 9, wobei CO₂ abgetrennt und das verbleibende Reingas (17) für die Verbrennung in einer Gasturbine konditioniert wird.

11. Das Verfahren nach Anspruch 10, wobei das konditionierte Reingas (17) in einem Wärmetausch mit Speisewasser vorgewärmt wird.
